(19) Europäisches Patentamt

European Patent Office

Office européen des brevets

(11) Veröffentlichungsnummer: **0 280 121 B1**

(12) **EUROPÄISCHE PATENTSCHRIFT**

(45) Veröffentlichungstag der Patentschrift:
10.04.91 Patentblatt 91/15

(21) Anmeldenummer: **88102018.4**

(22) Anmeldetag: **11.02.88**

(51) Int. Cl.⁵: **F02B 27/00, F02B 27/02**

(54) **Luftsammler.**

(30) Priorität: **24.02.87 DE 3705767**

(43) Veröffentlichungstag der Anmeldung:
**31.08.88 Patentblatt 88/35**

(45) Bekanntmachung des Hinweises auf die
Patenterteilung:
**10.04.91 Patentblatt 91/15**

(84) Benannte Vertragsstaaten:
**DE ES FR GB IT SE**

(56) Entgegenhaltungen:
**EP-A- 0 200 930**
**FR-A- 1 597 395**
**US-A- 3 708 957**
**19. INT. FISITA-CONGRESS, 8.-12. November**
**1982, "Paper no. 82032", Seiten 32.1 - 32.11; H.**
**SEIFERT: "Die charakteristischen Merkmale**
**der Schwingrohr- und Resonanzaufladung bei**
**Verbrennungsmotoren"**

(73) Patentinhaber: **Bayerische Motoren Werke**
**Aktiengesellschaft**
**Patentabteilung AJ-30 Postfach 40 02 40**
**Petuelring 130**
**W-8000 München 40 (DE)**

(72) Erfinder: **Carolin, Bernd**
**Schleissheimerstrasse 184**
**W-8000 München 40 (DE)**
Erfinder: **Weber, Claus**
**Nadistrasse 10**
**W-8000 München 40 (DE)**

(74) Vertreter: **Bücken, Helmut et al**
**Bayerische Motoren Werke**
**Aktiengesellschaft Postfach 40 02 40**
**Petuelring 130 - AJ-30**
**W-8000 München 40 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung der im Oberbegriff des ersten Anspruchs angegebenen Art.

Es ist allgemein bekannt (z.B. 19. Int. FISITA-Congress vom 08.-12.11.1982, Paper No. 82032 "Die charakt. Merkmale der Schwingrohr- und Resonanzaufladung bei Verbrennungsmaschinen"), daß durch die Ausbildung eines Ansaugsystems einer Brennkraftmaschine als Resonanzsystem in einem bestimmten Drehzahlbereich das Motordrehmoment angehoben werden kann. Üblicherweise stimmt man das Resonanzsystem bei niedrigen Brennkraftmaschinendrehzahlen ab, um in diesem Bereich einen Aufladeeffekt zu erzielen. Die hierzu benötigte Anordnung von Ausgleichsbehältern, Resonanzrohren und Resonanzkammern benötigt ein bestimmtes Bauvolumen, abhängig auf die abgestimmte Maschinendrehzahl. Hierbei können dann Platzprobleme bei den heutigen beengten Einbauverhältnissen in Kraftfahrzeugen auftreten.

Eine gattungsbildende Anordnung ist aus der FR-A-1 597 395 bekannt. Hierbei sind sowohl die zwei Resonanzrohre als auch die beiden Resonanzkammer jeweils koaxial angeordnet und parallel zueinander sowie parallel zur Maschinenlängsachse ausgeführt. Die erste dargestellte Lösung benötigt einen hohen Bauraum, da sowohl die Resonanzkammern als auch die Resonanzrohre in einer Ebene, abstehend vom Zylinderkopf, angeordnet sind. Nach der zweiten dargestellten Lösung können auch die Resonanzrohre und die Resonanzkammern ineinandergelegt werden. Hierbei wird dann ein geringes Volumen für die Resonanzkammer zur Verfügung gestellt, so daß damit keinen nennenswerten Aufladeeffekte erzielt werden können.

Aufgabe der vorliegenden Erfindung ist es, die bekannte Anordnung bei Aufrechterhaltung eines ausreichend großen Volumens für die Resonanzkammern und für die Resonanzrohre konstruktiv platzsparend auszubilden.

Diese Aufgabe wird erfindungsgemäß durch die Merkmale des ersten Anspruchs gelöst. Die Erfindung basiert auf der Erkenntnis, daß in einer ersten Ebene die Resonanzkammern in einer gemeinsamen Achse fluchtend angeordnet werden und in einer zweiten Ebene – hierzu versetzt – ebenfalls fluchtend die Resonanzrohre. Dadurch werden die beiden Resonanzkammern oberhalb der beiden Resonanzrohre angeordnet. Damit ergibt sich ein langgestreckter Luftsammler ohne große Tiefe bei vertretbarer Höhe. Die Längserstreckung des Luftsammlers kann dann über die volle Maschinenlänge erfolgen, so daß die volle Maschinenlänge zur Ausbildung der Resonanzrohre und Resonanzkammern zur Verfügung steht. Dadurch ist es auch möglich, den Luftsammler sehr nahe an den Zylinderkopf heranzubringen. Da die Resonanzrohre unterhalb der Resonanzkammer liegen, lassen sie sich in Richtung auf die Einlaßkanäle verschieben und gelangen so praktisch unter die Einlaßstutzen, die den Luftsammler mit dem Zylinderkopf verbinden. Dadurch ist es möglich, einen derartigen Luftsammler relativ problemlos in den Motorraum eines Kraftfahrzeuges unterzubringen, insbesondere wenn es sich um eine Reihenmotor handelt.

Bevorzugt wird die in den kennzeichnenden Merkmalen des Anspruchs 2 vorgeschlagene Anordnung gewählt.

Eine Begrenzung der Baulänge ohne funktionale Beeinträchtigung wird durch die Merkmale des Anspruchs 3 erzielt. Dadurch ergibt sich ein Luftsammlergehäuse mit glatten praktisch nicht zerklüfteten Außenwänden.

Die Weiterbildung nach Anspruch 4 hat den Vorteil, daß bei höheren als den abgestimmten Resonanzdrehzahlen das Resonanzsystem außer Kraft gesetzt wird, so daß die bei eingeschaltetem Resonanzsystem auftretende Verschlechterung gegenüber einer Brennkraftmaschine ohne Resonanzaufladung aufgefangen werden kann. Diese

Anordnung ist prinzipiell bekannt aus der JP-AS 42-27441, Aufgrund der erfindungsgmäßen Ausbildung des Luftsammlers läßt sich jedoch diese Anordnung problemlos und ohne weiteren Bauaufwand in das Luftsammlergehäuse integrieren.

Als steuerbares Verschlußorgan wird bevorzugt die Ausbildung nach Anspruch 5 vorgeschlagen. Die Drosselklappe ist hierbei in einer senkrechten Ebene zu der Längsausdehnung der Resonanzkammern bzw. -rohre angeordnet, Dadurch kann die Drosselklappenwelle problemlos nach vorne, d. h. in Richtung auf den Auslaßbehälter herausgeführt werden.

Die Anspruche 6 und 7 beschreiben die Anordnung eines Ölabscheiders zum Zurückführen der Kurbelgehäusegase in den Ansaugbereich der Brennkraftmaschine, Durch die gewählte Anordnung wird die Bauhöhe des Luftsammlers nur geringfügig verändert. Darüber hinaus liegt der Ölabscheider sehr nah am Kurbelgehäuse, wodurch kurze Verbindungsleitungen zwischen Ölabscheider und Kurbelgehäuse erreicht werden.

Im folgenden wird die Erfindung anhand eines bevorzugten Ausführungsbeispiels näher erläutert. Es stellen dar:

Fig. 1 eine perspektivische Ansicht des erfindungsgemäß aufgebauten Luftsammlers;

Fig. 2 einen Längsschnitt durch die Resonanzbehälter;

Fig. 3 einen Querschnitt durch den erfindungsgemäßen Luftsammler im Bereich der Übertrittsräume.

Fig. 4 den schematischen Verlauf des Drehmomentes über der Drehzahl.

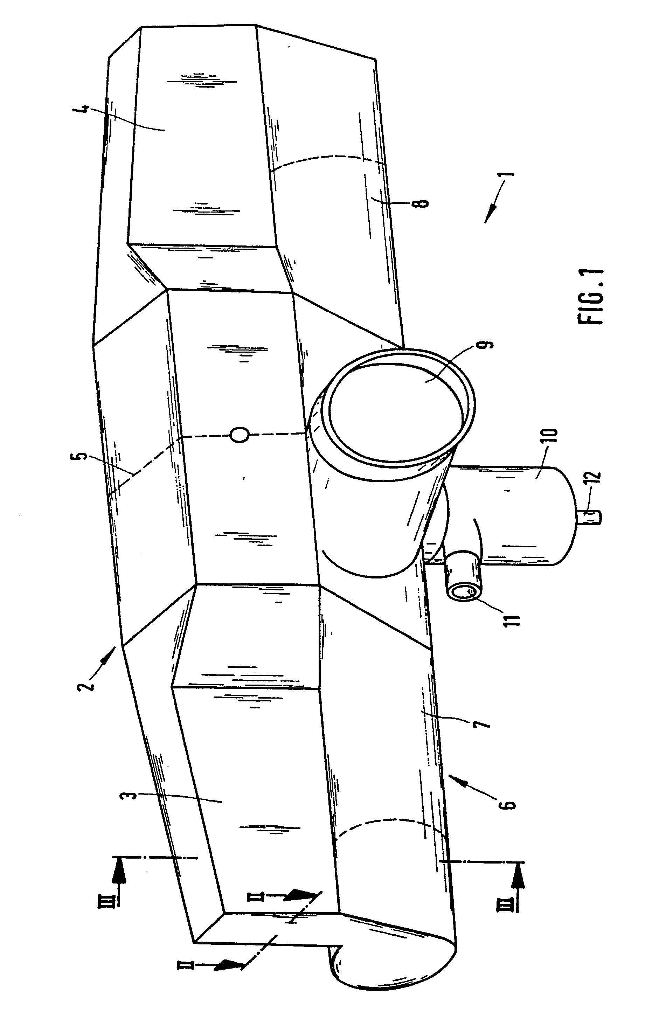

In Fig. 1 ist das erfindungsgemäß aufgebaute Luftsammlergehäuse 1 perspektivisch dargestellt. Es besteht aus dem oberen ersten Teil 2, in dem die beiden Resonanzkammern 3 und 4 koaxial angeordnet sind. Die Resonanzkammern 3 und 4 besitzen dadurch eine gemeinsame Trennwand 5.

Parallel unterhalb des ersten Teils 2 ist ein zweiter Teil 6 vorgesehen, in dem sich die beiden Resonanzrohre 7 und 8 befinden. Die beiden Resonanzrohre 7 und 8 besitzen ebenfalls eine gemeinsame Stirnfläche. In diese mündet die Lufteintrittsleitung 9, die gleichzeitig die Verbindung zum nicht dargestellten Ausgleichsbehälter herstellt.

Unterhalb des zweiten Teils 6 ist in der Ebene der gemeinsamen Stirnflächen der beiden Resonanzrohre 7 und 8 ein Ölabscheider 10 angeordnet. Dieser ist in herkömmlicher Weise aufgebaut und besteht aus einer Einlaßöffnung 11, die mit dem Kurbelgehäuse der nicht weiter dargestellten Brennkraftmaschine verbunden ist. Über diese werden die Kurbelgehäuseentlüftungsgase in den Ölabscheider 10 eingeleitet. Innerhalb des Ölabscheiders 10 ist eine Umlenkvorrichtung vorgesehen für die Kurbelgehäusegase. Dadurch fällt das in ihnen enthaltene Öl aus und wird über einen Auslaßstutzen 12 wieder zurück ins Kurbelgehäuse geführt. Die so von Öltröpfchen befreiten Kurbelgehäusegase werden über einen in Fig.1 nicht sichtbaren Verbindungsstutzen in die beiden Resonanzrohre geleitet.

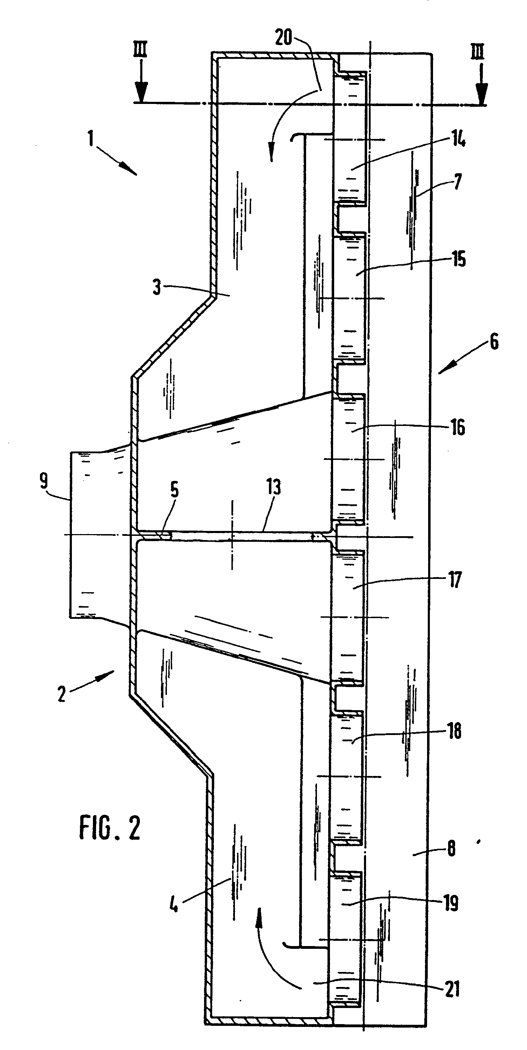

In Fig. 2 ist ein Längsschnitt durch den erfindungsgemäß aufgebauten Luftsammler 1 dargestellt. Hierbei ist die Trennwand 5 zwischen den beiden Resonanzkammern 3 und 4 sichtbar sowie die darin angeordnete Öffnung 13. Diese Öffnung wird von einer nicht näher dargestellten steuerbaren Drosselklappe beherrscht, deren Welle in Fig. 2 nach links aus dem Luftsammler 1 herausführt. Hieran können dann geeignete Steuermittel angeschlossen werden, um die Drosselklappe in ihrer Stellung je nach den gewünschten Parametern zu verändern.

Ebenfalls in Fig. 2 sichtbar sind die Auslaßöffnungen 14-19, über die die Resonanzkammern 3 und 4 mit den Einlaßkanälen im Zylinderkopf der nicht näher dargestellten Brennkraftmaschine verbunden werden.

Auf den beiden äußeren Stirnseiten der Resonanzkammern 3 und 4 sind die bezogen auf die Resonanzrohre 7, 8 radial ausgerichteten Übertrittsräume 20 und 21 sichtbar. Diese verbinden die entsprechenden Resonanzrohre 7 und 8 mit den zugehörigen Resonanzkammern 3 und 4.

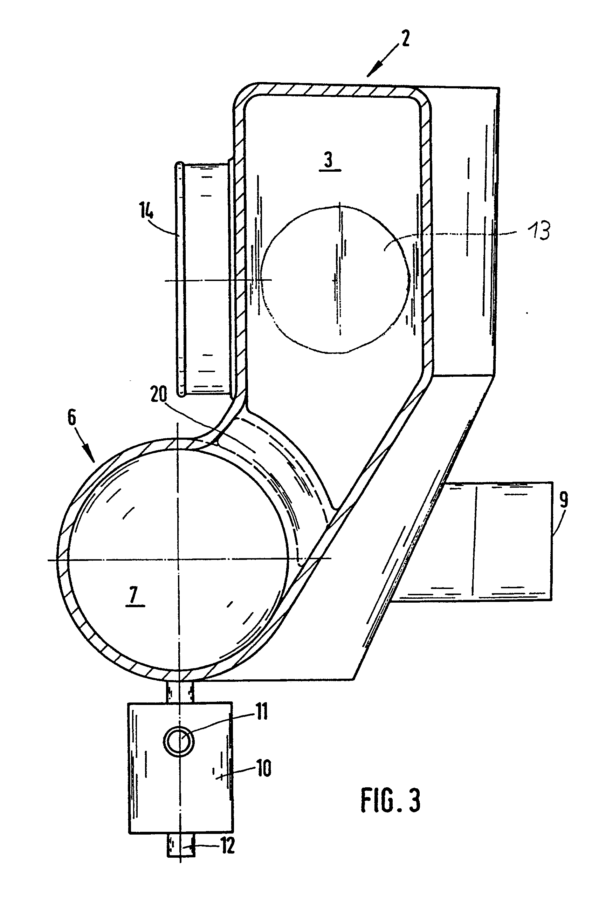

In Fig. 3 ist ein Querschnitt durch den erfindungsgemäßen Luftsammler 1 auf Höhe des Übertrittsraumes, hier 20, dargestellt. Auch ist hieraus die Lage der Resonanzrohre 7, 8 zu der der Resonanzkammern 3, 4 in parallelen zueinander versetzten Ebenen sichtbar.

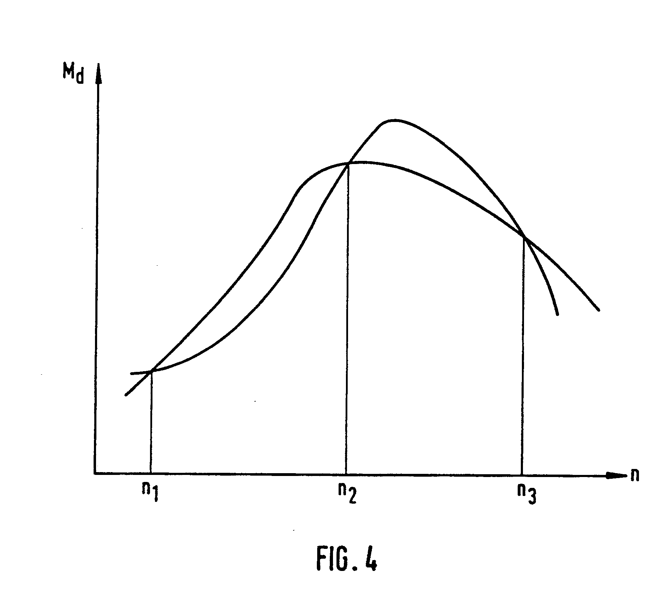

Fig. 4 zeigt den prinzipiell bekannten Drehmomentverlauf über der Drehzahl bei mit einem Resonanzsystem versehenen Brennkraftmaschinen. Durch das Resonanzsystem wird zwischen den Drehzahlen $n_1$ und $n_2$ der obere Kurvenverlauf erreicht. Hierbei ist die Drosselklappe geschlossen. Bleibe die Drosselklappe geschlossen, so führte dies zu einem Abfall des Drehmomentes zwischen den Drehzahlen $n_2$ und $n_3$. Durch Öffnen der Drosselklappe wird jedoch der Drehmomentverlauf nach der in diesem Bereich oberen Kurve erziehlt. Durch ein Schließen der Drosselklappe bei der Drehzahl $n_3$ wird wieder auf den alten (ersten) Drehmomentverlauf gewechselt, so daß hier in jedem Drehzahlbereich das höchstmögliche Dremoment zur Verfügung steht.

## Ansprüche

1. Luftsammler für Brennkraftmaschinen mit Resonanzaufladung, bestehend aus einem funktionell zweigeteilten Gehäuse, das einerseits über zwei Resonanzrohre mit einem Ausgleichsbehälter und andererseits über zwei Resonanzbehälter mit je einer gleichen Anzahl von Zylinder-Einlaßkanälen verbunden ist, in dem der erste Teil des Luftsammlergehäuses die zwei koaxial angeordneten Resonanzkammern und dessen zweiter Teil die zwei koaxial angeordneten und mit den Resonanzkammern verbundenen Resonanzrohre enthält, deren Längsachsen jeweils parallel zueinander und parallel zur Motorlängsachse verlaufen, dadurch gekennzeichnet, daß die Resonanzrohre (7, 8) parallel versetzt zu der Längserstreckung der beiden Resonanzkammern (3, 4) in Richtung auf die Einlaßkanäle in verschiedenen Ebenen angeordnet sind.

2. Luftsammler nach Anspruch 1, dadurch gekennzeichnet, daß die Resonanzkammern (3, 4) oberhalb der Resonanzrhore (7, 8) liegen.

3. Luftsammler nach einem der vorangegangenen Ansprüche dadurch gekennzeichnet, daß an den beiden Stirnseiten des Luftsammlers Übertrittsräume (20, 21) vorgesehen sind, in die einerseits je ein Resonanzrohr (7, 8) und andererseits die zugehörige Resonanzkammer (3, 4) mündet.

4. Luftsammler nach einem der vorangegangenen Ansprüche, dadurch gekennzeichnet, daß in der gemeinsamen Stirnwand (Trennwand 5) der beiden Resonanzkammern (3, 4) eine verschließbare Öffnung (13) vorgesehen ist.

5. Luftsammler nach Anspruch 4, dadurch gekennzeichnet, daß als Verschlußorgan in der verschließbaren Öffnung (13) eine steuerbare Drosselklappe vorgesehen ist.

6. Luftsammler nach einem der vorangegangenen Ansprüche, dadurch gekennzeichnet, daß im Bereich des Zusammentreffens der beiden Resonanzrohre (7, 8) die Öffnung eines Ölabscheiders (10) vorgesehen ist.

7. Luftsammler nach Anspruch 6, dadurch gekennzeichnet, daß der Ölabscheider (10) aus einem sich unterhalb der Resonanzrohre (7, 8) angeordneten Gehäuse mit Umlenkeinrichtungen zur Führung der Kurbelgehäusegase besteht.

## Claims

1. An air plenum chamber for internal combustion engines with resonance charging, comprising a housing divided functionally into two which is connected on the one hand through two resonance tubes with a compensating container and on the other hand through two resonance containers with an equal number each of cylinder inlet passages, in which the first part of the air plenum chamber housing contains the two coaxially-arranged resonance chambers and its second part contains the two coaxiallyarranged resonance tubes connected with the resonance chambers, the longitudinal axes of which tubes extend in each case parallel to one another and parallel to the longitudinal axis of the engine, characterised in that the resonance tubes (7, 8) are arranged offset in different planes parallel to the longitudinal extent of the two resonance chambers (3, 4) in the direction towards the admission passages.

2. An air plenum chamber according to Claim 1, characterised in that the resonance chambers (3, 4) lie above the resonance tubes (7, 8).

3. An air plenum chamber according to either one of the preceding Claims, characterised in that transfer chambers (20, 21) are provided on the two ends of the air plenum chamber, into which chambers there open on the one hand a resonance tube (7, 8) in each case and on the other hand the respective resonance chamber (3, 4).

4. An air plenum chamber according to any one of the preceding Claims, characterised in that a closable opening (13) is provided in the common end wall (partition 5) of the two resonance chambers (3, 4).

5. An air plenum chamber according to Claim 4, characterised in that a controllable throttle flap is provided as a closure element in the closable opening (13).

6. An air plenum chamber according to any one of the preceding Claims, characterised in that the opening of an oil separator (10) is provided in the region where the two resonance tubes (7, 8) meet.

7. An air plenum chamber according to Claim 6, characterised in that the oil separator (10) comprises a housing arranged beneath the resonance tubes (7, 8), with diverting devices for the guidance of the crank case gases.

## Revendications

1. Boîtier répartiteur d'air pour moteur à combustion interne avec suralimentation en résonance, se composant d'un carter fonctionnel en deux parties, qui d'un côté est relié par deux tubes de résonance avec un réservoir de compensation et d'autre part est relié à un nombre chaque fois identique des canaux d'entrée de cylindre par deux réservoirs de résonance, dans lequel la première partie du boîtier répartiteur d'air contient les deux chambres de résonance disposées coaxialement et dont la deuxième partie comporte les deux tubes de résonance disposés coaxialement et reliés aux chambres de résonance, tubes dont les axes longitudinaux se développent respectivement parallèlement l'un par rapport à l'autre et parallèlement à l'axe longitudinal du moteur, caractérisé en ce que les tubes de résonance (7, 8) décalés parallèlement par rapport au développement longitudinal des deux chambres de résonance (3, 4) sont disposés en direction des canaux d'admission dans des plans différents.

2. Boîtier répartiteur d'air selon la revendication 1, caractérisé en ce que les chambres de résonance (3, 4) sont situées au-dessus des tubes de résonance (7, 8).

3. Boîtier répartiteur d'air selon l'une des revendications 1 ou 2, caractérisé en ce que sur les deux côtés frontaux du boîtier sont prévus des espaces de passage (20, 21) dans lesquels respectivement débouche d'un côté un tube de résonance (7, 8) et de l'autre côté de la chambre de résonance (3, 4) correspondante.

4. Boîtier répartiteur d'air selon l'une des revendications 1 à 3, caractérisé en ce que dans la paroi frontale commune (paroi de séparation 5) des deux chambres de résonance (3, 4) est prévue une ouverture (13) pouvant être fermée.

5. Boîtier répartiteur d'air selon la revendication 4, caractérisé en ce que comme organe de fermeture de l'ouverture (13) pouvant être fermée est prévue un clapet d'étranglement susceptible d'être commandé.

6. Boîtier répartiteur d'air selon l'une des revendications 1 à 5, caractérisé en ce que dans la zone de rencontre des deux tubes de résonance (7, 8) est prévue l'ouverture d'un séparateur d'huile (10).

7. Boîtier répartiteur d'air selon la revendication 6, caractérisé en ce que le séparateur d'huile (10) se compose d'un boîtier placé en-dessous des tubes de résonance (7, 8) comportant des dispositifs en renvoi et sert pour les gaz provenant du carter de vilebrequin.

FIG.1

FIG. 2

FIG. 3

FIG. 4